# EUROPEAN PATENT APPLICATION

(11) **EP 4 349 798 A1**
(43) Date of publication of application: **10.04.2024**
(21) Application number: 22946063.9
(22) Date of filing: 22.08.2022
(51) Int. Cl.: C04B 35/185, F27D 5/00, C04B 35/10, C04B 35/49, C04B 35/622

(54) **SAGGER AND PREPARATION METHOD THEREFOR**

(30) Priority: 15.08.2022 CN 202210972298
(71) Applicant: Tianjin B&M Science And Technology Co., Ltd., Tianjin 300384 (CN); Guangdong Shan Mo New Materials Technology Co., Ltd., Zhaoqing, Guangdong 526344 (CN)
(72) Inventor: WU, Mengtao, Binhai New Area Tianjin 300384 (CN); XU, Ning, Binhai New Area Tianjin 300384 (CN); LI, Yuanbing, Guangdong 526344 (CN); WANG, Hailu, Guangdong 526344 (CN); HE, Xiaohong, Guangdong 526344 (CN)
(74) Representative: Ström & Gulliksson AB
(86) International application number: PCT/CN2022/113871
(87) International publication number: WO 2024/036648

(57) **Abstract**

The present disclosure provides a sagger, comprising a base body, an intermediate layer and a working layer stacked in sequence. The base body comprises mullite and cordierite, the intermediate layer comprising aluminium oxide, and the working layer includes aluminum titanate. The present disclosure further provides a method for preparing the sagger. The sagger provided by this present disclosure has a simple process, low cost, energy saving and environmental protection, and has advantages such as good thermal shock stability, strong corrosion resistance, long life, and has good market application prospects in the field of saggers for calcining cathode materials of lithium battery .

## Description

This application claims priority to Chinese Patent Application No. 202210972298.7, titled "SAGGER AND PREPARATION METHOD THEREFOR", filed on August 15, 2022 with the China National Intellectual Property Administration, which is incorporated herein by reference in its entirety.

### FIELD

The present disclosure relates to the technical field of the electrode material of lithium battery and in particular to a sagger and a preparation method therefor.

### BACKGROUND

As a new generation of environment friendly battery, lithium-ion battery has been widely used in fields such as mobile communications, military, aerospace, transportation and information science. Lithium-ion battery cathode materials are an important part of lithium-ion batteries. In actual production, a high-temperature solid-state synthesis method is a main method for preparing lithium-ion battery cathode materials due to its simple process and low equipment requirements.

As a container for raw materials during the high-temperature calcining process of the lithium-ion battery cathode materials, sagger has a chemical stability playing a vital role in the normal production, cleanliness, yield and performance of the lithium-ion battery cathode materials. With the increasing demand for lithium battery materials and the development trend of high voltage, more stringent requirements are put forward for the performance of the sagger, especially thermal shock stability and corrosion resistance.

Chinese patent with a publication number CN110590341B discloses a sol-bonded sagger for sintering lithium battery cathode materials and preparation method therefor, wherein the binding performance of the sagger is improved by adding mullite sol, but its main phases are still corundum, cordierite, magnesium aluminum spinel, and mullite as traditional phases, which are difficult to resist the erosion caused by calcining process of lithium-ion battery cathode materials. Chinese patent with a publication number CN102914165B discloses a high-stability and long-life sagger for the calcining of lithium batteries cathode materials and a preparation method therefor, in which low-expansion, corrosion-resistant aluminum titanate is added to improve the thermal shock resistance and corrosion resistance of the sagger, but directly adding low-expansion aluminum titanate will lead to low strength of the sagger and reduce service life thereof, and the cost of directly adding aluminum titanate is high.

In view of this, it is of great significance to provide a sagger with excellent binding performance, thermal shock resistance and erosion resistance and long service life.

### SUMMARY

The technical problem solved by the present disclosure is to provide a long-life sagger, which has advantages of good binding performance, excellent thermal shock performance and corrosion resistance, long service life, or no cracking or peeling during use, ensuring the cleanliness of cathode material of lithium battery.

In view of this, the present disclosure provides a sagger, comprising a base body, an intermediate layer and a working layer stacked in sequence.

The base body comprises mullite and cordierite, the intermediate layer comprises aluminum oxide, and the working layer comprises aluminum titanate.

Preferably, the working layer further comprises zirconium oxide.

The present disclosure further provides a method for preparing the sagger, comprising the following steps:
mixing mullite and cordierite, and molding, to obtain a base body;
distributing aluminium oxide powder on a surface of the base body, and pressing, to obtain a sagger base body;
distributing a working layer mixture on a surface of the sagger base body, pressing and heat treating, to obtain a sagger; wherein the working layer mixture comprises a first mixture that can react to obtain aluminum titanate.

Preferably, the working layer mixture comprises aluminium oxide powder, titanium dioxide powder and kaolin powder.

Preferably, the base body is prepared by a method specifically comprising:
mixing mullite powder, cordierite powder and kaolin powder to obtain a base body material, mixing mullite particles and cordierite particles to obtain a second mixture, adding a binding agent to the second mixture, and then mixing with the base body material, and molding, to obtain the base body.

Preferably, based on a sum of the base body material and the second mixture, a content of the mullite powder ranges from 10-15wt%, a content of the cordierite powder ranges from 25 wt% to 30wt%, and a content of the kaolin powder ranges from 10wt% to 20wt%, a content of the mullite particles ranges from 30wt% to 45wt%, a content of the cordierite particles is 5-10wt%, and a content of the binding agent ranges from 5wt% to 10wt%.

Preferably, the method meets at least one of the following conditions: in the base body material, a content of Al₂O₃ in the mullite powder is ≥ 65wt% and a particle size of the mullite powder is less than 89 µm; a content of Al₂O₃ in the cordierite powder is ≥ 34wt%, a content of SiO₂ in the cordierite powder is ≥ 42wt%, and a content of MgO in the cordierite powder is ≥ 14wt%, and an average particle size of the cordierite powder is less than 75 µm; a content of Al₂O₃ in the kaolin powder is ≥ 35wt%; and a particle size of the kaolin powder is less than 60 µm.

Preferably, in the second mixture, a content of Al₂O₃ in the mullite particles is ≥ 65wt%; a particle gradation of the mullite particles is that the particle size with less than 3mm and greater than or equal to 1mm ranges from 40wt% to 50wt%, the particle size with less than 1mm and greater than or equal to 0.5mm ranges from 30wt% to 45wt%, and the particle size with less than 0.50mm ranges from 20wt% to 25wt%; a content of Al₂O₃ in the cordierite particles is ≥ 34wt%, a content of SiO₂ in the cordierite particles is ≥ 42wt%, and a content of MgO in the cordierite particles is ≥ 14wt%; a particle gradation of the cordierite particles is that a particle size with less than 1 mm and greater than or equal to 0.5 mm ranges from 60wt% to 75wt%, and a particle size with less than 0.50 mm ranges from 25wt% to 40wt%.

Preferably, a content of Al₂O₃ in the aluminium oxide powder in the intermediate layer is ≥ 99wt%, and a particle size of the aluminium oxide powder is less than 20 µm.

Preferably, based on a mass of the first mixture, the first mixture comprises 40-50wt% of aluminium oxide powder, 20-35wt% of zirconium oxide powder, 10-20wt% of titanium dioxide powder and 10-20wt% kaolin powder; the working layer mixture further comprises additional materials, and the additional materials are 3-5wt% of cerium oxide powder and 3-8wt% of water based on the first mixture.

Preferably, the working layer mixture meets at least one of the following conditions: the Al₂O₃ content of the aluminium oxide powder is ≥ 99wt%, and the particle size of the aluminium oxide powder is less than 20 µm; the ZrO₂ content of the zirconium oxide powder is ≥ 95wt%, and the particle size of the zirconium oxide powder is less than 30 µm; the TiO₂ content of the titanium dioxide powder is ≥ 95wt%, and the particle size of the titanium dioxide powder is less than 30 µm; in the additional material, the CeO₂ content of the cerium oxide powder is ≥ 95wt%, and the particle size of the cerium oxide powder is less than 40 µm.

Preferably, the heat treatment is performed at a temperature of 1340 °C to 1410 °C for a duration of 5 h to 10 h.

The present disclosure provides a sagger, the sagger comprises a base body, an intermediate layer and a working layer stacked in sequence; the base body comprises mullite and cordierite, the intermediate layer comprises aluminium oxide, and the working layer comprises aluminum titanate. The present disclosure prevents the raw materials of the base body and the working layer from reacting to generate low-melting-point substances that affect the performance of the sagger by adding an intermediate layer-aluminium oxide layer between the base body and the working layer of the sagger; the aluminum titanate in the working layer has low swelling and erosion resistance properties.

Furthermore, the working layer further comprises zirconium oxide; the zirconium oxide makes the thermal expansion coefficient of the working layer and the base body close to each other, thereby preventing the base body and the working layer from cracking, and in the meantime further increasing the thermal shock stability of the working layer; and improving the binding strength between the working layer and the base body, and in the meantime further improving the service life of the sagger.

The present disclosure further provides a method for preparing the sagger, specifically comprising mixing mullite and cordierite and molding to obtain a base body; then distributing aluminium oxide powder on a surface of the base body and pressing to obtain a sagger base body; and finally distributing a working layer mixture on a surface of the sagger base body, pressing and heat treating to obtain a sagger; the working layer mixture comprises a first mixture that can react to obtain aluminum titanate. During the process of preparing the sagger, the aluminum titanate in the working layer of the present disclosure is obtained by reaction of raw materials, thereby avoiding the problem of reducing the strength of the sagger caused by directly adding aluminum titanate.

The experimental result shows that a volume density of the long-life sagger prepared by the present disclosure for calcining lithium battery cathode materials ranges from 2.53g/cm³ to 2.84g/cm³; the normal temperature withstand pressure strength ranges from 100 MPa to 140 MPa; lithium cobaltate as the cathode material of lithium battery is synthesized at 1200 °C, the sagger can be used more than fifty-eight times; the sagger for producing the ternary cathode materials at 1000 °C can be used more than fifty-eight times.

Therefore, the sagger provided by the present disclosure has the advantages of good thermal shock stability, excellent corrosion resistance and long service life.

### DETAILED DESCRIPTION OF EMBODIMENTS

In order to further understand the present disclosure, the preferred embodiments of the present disclosure are described below in conjunction with examples. However, it should be understood that these descriptions are only to further illustrate the features and advantages of the present disclosure, rather than to limit the claims of the present disclosure.

In view of conventional technology, the sagger used for sintering lithium battery cathode materials has problems such as poor corrosion resistance and short life. This present disclosure provides a sagger, which finally makes the obtained sagger have the advantages of excellent binding performance, thermal shock resistance and corrosion resistance, and long service life by introducing an intermediate layer and adjusting the working layer. Specifically, an embodiment of the present disclosure discloses a sagger, comprising a base body, an intermediate layer and a working layer stacked in sequence.

The base body comprises mullite and cordierite, the intermediate layer comprises aluminum oxide, and the working layer comprises aluminum titanate.

The sagger provided by the present disclosure comprises a base body, an intermediate layer and a working layer. More specifically, the intermediate layer is provided on a surface of the base body, and the working layer is provided on a surface of the intermediate layer away from the base body. The sagger is a device well known to those skilled in the art to be used in the production of electrode materials of lithium-ion battery, and the inner surface of the sagger is in contact with the cathode material of lithium-ion battery.

In the sagger provided by the present disclosure, the working layer further comprises zirconium oxide, which makes the thermal expansion coefficients of the working layer and the base body close to each other, thereby preventing cracking between the base body and the working layer, and in the meantime further increasing the thermal shock stability of the working layer; and improving the binding strength between the working layer and the sagger base body, and in the meantime the service life of the sagger is increased. The working layer provided by the present disclosure uses aluminum titanate as a main body, which has characteristics of low expansion and corrosion resistance.

An aluminum oxide layer is introduced into the intermediate layer of the sagger, and the aluminum oxide layer can effectively prevent the base body from reacting with the raw materials in the working layer to generate low-melting-point substances that would affect the performance of the sagger.

Furthermore, the present disclosure further provides a method for preparing the sagger, comprising the following steps:
mixing mullite and cordierite, and molding, to obtain a base body;
distributing aluminium oxide powder on a surface of the base body and pressing, to obtain a sagger base body; and
distributing a working layer mixture on a surface of the sagger base body, pressing and heat treating to obtain a sagger; wherein the working layer mixture comprises a first mixture that can react to obtain aluminum titanate.

In the present disclosure, the method for preparing the base body specifically comprises the following steps:
mixing mullite powder, cordierite powder and kaolin powder to obtain a base body material, mixing mullite particles and cordierite particles to obtain a second mixture, adding a binding agent into the second mixture and then mixing with the base body material, and molding to obtain the base body.

First, the raw materials in the base body and working layer are explained in detail.

As a preferred solution, in the base body material, the content of Al₂O₃ in the mullite powder is ≥ 65wt%, and the particle size of the mullite powder is less than 89 µm; the content of Al₂O₃ in the cordierite powder is ≥ 34wt%, and the content of SiO₂ in the cordierite powder is ≥ 42wt%, the content of MgO in the cordierite powder is ≥14wt%; the average particle size of the cordierite powder is less than 75 µm; the content of Al₂O₃ in the kaolin powder is ≥35wt%; the particle size of the kaolin powder is less than 60 µm. Based on a sum of the base body material and the second mixture, the content of the mullite powder is 10-15wt%. Specifically, the content of the mullite powder is 10wt%, 11wt%, 12wt%, 13wt%, 14wt% or 15wt%. The content of the cordierite powder is 25-30wt%. Specifically, the content of the cordierite powder is 25wt%, 26wt%, 27wt%, 28wt%, 29wt% or 30wt%. The content of the kaolin powder is 10-20wt%. Specifically, the content of kaolin powder is 11wt%, 12wt%, 14wt%, 16wt%, 17wt%, 18wt%, 19wt% or 20wt%.

In the second mixture, the content of Al₂O₃ in the mullite particles is ≥65wt%; the particle gradation of the mullite particles is that the particle size with less than 3mm and greater than or equal to 1mm is 40-50wt%, the particle size with less than 1mm and greater than or equal to 0.5mm is 30-45wt%, and the particle size with less than 0.50mm is 20-25wt%. The content of Al₂O₃ in the cordierite particles is ≥34wt%, the content of SiO₂ in the cordierite particles is ≥42wt%, and the content of MgO in the cordierite particles is ≥14wt%. The particle gradation of cordierite particles is that the particle size with less than 1mm and greater than or equal to 0.5mm is 60-75wt%, and the particle size with less than 0.50mm is 25-40wt%. Based on a sum of the base body material and the second mixture, the content of the mullite particles is 30-45wt%. More specifically, the content of the mullite particles is 32wt%, 34wt%, 35wt%, 36wt% , 37wt%, 38wt%, 39wt%, 41wt%, 42wt%, 43wt%, 44wt% or 45wt%. The content of the cordierite particles is 5-10wt%. More specifically, the content of the cordierite particles is 5wt%, 6wt%, 7wt%, 8wt%, 9wt% or 10wt%.

The content of the binding agent is 5-10wt%. More specifically, the content of the binding agent is 5wt%, 6wt%, 7wt%, 8wt%, 9wt% or 10wt%. The binding agent is selected from one or more of polyvinyl alcohol solution, aluminum sol, silica sol, water glass and alkaline pulp waste liquid. More specifically, the binding agent is selected from one or more of silica sol, aluminum sol and water glass; the silica sol, aluminum sol or water glass can react with kaolin in the base body during the heat treatment stage to form mullite, which can further enhance the strength of the sagger.

In the present disclosure, the working layer mixture comprises a first mixture and an additional material. The first mixture comprises aluminium oxide powder, zirconium oxide powder, titanium dioxide powder and kaolin powder. The aluminium oxide powder and titanium dioxide powder can react to form aluminum titanate; the additional material comprises cerium oxide powder and water. Among them, in the first mixture, the content of Al₂O₃ in the aluminium oxide powder is ≥99wt%; the particle size of the aluminium oxide powder is less than 20 µm. The content of ZrO₂ in the zirconium oxide powder is ≥95wt%; the particle size of the zirconium oxide powder is less than 30 µm. The content of TiO₂ in the titanium dioxide powder is ≥95wt%; the particle size of the titanium dioxide powder is less than 30 µm. The content of CeO₂ in the cerium oxide is ≥95wt%; the particle size of the cerium oxide powder is less than 40 µm. The content of the aluminium oxide powder is 40-50wt%. Specifically, the content of the aluminium oxide powder is 40wt%, 41wt%, 42wt%, 43wt%, 44wt%, 45wt%, 46wt%, 47wt%, 48wt%, 49wt% or 50wt%. The content of the zirconium oxide powder is 20-35wt%. Specifically, the content of the zirconium oxide powder is 21wt%, 22wt%, 23wt%, 25wt%, 26wt%, 27wt%, 28wt%, 29wt%, 30wt%, 31wt%, 32wt%, 33wt%, 34wt% or 35wt%. The content of the titanium dioxide powder is 10-20wt%. Specifically, the content of the titanium dioxide powder is 10wt%, 11wt%, 12wt%, 13wt%, 14wt%, 15wt%, 16wt%, 17wt%, 18wt%, 19wt % or 20wt%. The content of the kaolin powder is 10-20wt%. Specifically, the content of the kaolin powder is 10wt%, 11wt%, 12wt%, 13wt%, 14wt%, 15wt%, 16wt%, 17wt%, 18wt%, 19wt% or 20wt%.

The additional material is 3-5wt% of cerium oxide powder and 3-8wt% of water based on the first mixture. More specifically, the cerium oxide powder is 3wt%, 4wt% or 5wt%, and the water is 3wt%, 4wt%, 5wt%, 6wt%, 7wt% or 8wt%.

In the working layer, the titanium dioxide powder and aluminium oxide powder react *in situ* to generate aluminum titanate with low expansion and excellent corrosion resistance; the cerium oxide powder promotes the formation of aluminum titanate; the zirconium oxide powder makes the thermal expansion coefficients of the working layer and the base body close to each other, thereby preventing cracking between the base body and the working layer, and in the meantime further increasing the thermal shock stability of the working layer; and improving the binding strength between the working layer and the sagger base body, and in the meantime improving the service life of the sagger.

In the present disclosure, the content of Al₂O₃ in the aluminium oxide powder in the intermediate layer is ≥ 99wt%, and the particle size of the aluminium oxide powder is less than 20 µm.

In the process of preparing the above sagger, in the process of preparing the base body, the mixing time of the base body material ranges from 5-10 h, the mixing time of the second mixture ranges from 2-5 h, and the mixing time of the second mixture and the binding agent is 1-2 h, and the final mixing time of the base body material is 1-3 h. The molding method can be carried out in a manner well known to those skilled in the art.

In the process of preparing the working layer mixture, the mixing is performed by ball milling for a duration of 3-5 h.

The heat treatment is performed at a temperature of 1340 °C to 1410 °C for a duration of 5-10 h. In the process, the titanium dioxide powder and aluminium oxide in the working layer *in situ* generate aluminum titanate with excellent performance.

The present disclosure provides a long-life sagger for calcining lithium battery cathode materials that is environment friendly, simple in process, low in production cost, and has great industrialization prospects. The sagger has excellent binding performance, thermal shock resistance and corrosion resistance, and has a long service life, and the sagger does not crack or peel off during use, ensuring the cleanliness of the cathode material of lithium battery.

In order to further understand the present disclosure, the sagger provided by the present disclosure, preparation method therefor and application thereof will be described in detail below in conjunction with the examples, and the protection scope of the present disclosure is not limited by following examples.

In order to avoid repetition, first, the relevant technical parameters involved in this specific embodiment are described in a unified manner as follows, and will not be repeated in the examples.

In the base body material of the base body, the content of Al₂O₃ in the mullite powder is ≥ 65wt%, the particle size of the mullite powder is less than 89 µm; the content of Al₂O₃ in the cordierite powder is ≥ 34wt%, the content of SiO₂ in the cordierite powder is ≥ 42wt%, and the content of MgO in the cordierite powder is ≥ 14wt%; the average particle size of cordierite powder is less than 75µm; the content of Al₂O₃ in kaolin is ≥ 35wt%, and the particle size of kaolin is less than 60µm.

In the second mixture of the base body, the content of Al₂O₃ in the mullite particles is ≥ 65wt%; the particle gradation of the mullite particles is that the particle size with less than 3mm and greater than or equal to 1mm is 40-50wt%, and the particle size with less than 1mm and greater than or equal to 0.5mm is 30-45wt%, and the particle size with less than 0.50mm is 20-25wt%; the content of Al₂O₃ in the cordierite particles is ≥ 34wt%, the content of SiO₂ in the cordierite particles is ≥ 42wt%, and the content of MgO in the cordierite particles is ≥ 14wt%; the particle gradation of the cordierite particles is that the particle size with less than 1mm and greater than or equal to 0.5mm is 60-75wt%, the particle size with less than 0.50mm is 25-40wt%.

In the first mixture of the working layer, the content of Al₂O₃ in the aluminium oxide powder is ≥ 99wt%, the particle size of the aluminium oxide powder is less than 20µm; the content of ZrO₂ in the zirconium oxide powder is ≥ 95wt%, the particle size of the zirconium oxide powder is less than 30µm; the content of TiO₂ in the titanium dioxide powder is ≥ 95wt%, the particle size of the titanium dioxide powder is less than 30µm.

In the additional material of the working layer, the content of CeO₂ in the cerium oxide powder is ≥ 95wt%, and the particle size of the cerium oxide powder is less than 40µm.

The binding agent is any one of polyvinyl alcohol solution, aluminum sol, silica sol, water glass and alkaline pulp waste liquid or a mixture thereof.

The above raw materials are all commercially available products.

### Example 1

In step 1, 10wt% of mullite powder, 30wt% of cordierite powder, and 10wt% of kaolin powder were mixed in a high-speed mixer for 5 hours to obtain a base body material, and then 45wt% of mullite particles, 5wt% of cordierite particles were mixed for 2 hours to prepare a second mixture, and then 5wt% of binding agent based on a total of the base body material and the second mixture was added into the second mixture for mixing for 1 hour, then the mixture was added into the base body material for mixing for 1 hour, and machine-pressed to form a base body. The binding agent was polyvinyl alcohol solution or alkaline pulp waste liquid.

In step 2, 40wt% of aluminium oxide powder, 30wt% of zirconium oxide powder, 20wt% of titanium dioxide powder, and 10wt% of kaolin powder were used as raw materials, and then 3wt% of cerium oxide and 3wt% of water were added based on the raw materials, and the mixture was ball milled for 3 hours, dried, and crushed to obtain a working layer mixture.

In step 3, a layer of aluminium oxide powder with a thickness of 0.5mm was evenly distributed on the working surface of the base body, and machine-pressed to obtain a sagger base body.

In step 4, a layer of working layer mixture with a thickness of 2.0 mm was evenly distributed on the working surface of the sagger base body, and machine-pressed and dried; and then kept at the temperature of 1340 °C for 5 hours to obtain a long-life sagger for calcining the lithium battery positive materials.

The long-life sagger for calcining lithium battery cathode materials prepared in this example was tested. The volume density was 2.53g/cm³; and the normal temperature compressive strength was 100MPa. The lithium battery cathode material, lithium cobaltate, was synthesized at 1200 °C. When the prepared sagger for calcining lithium battery cathode materials was used more than fifty-eight times, the working surface was peeled off; when the sagger for producing the ternary cathode materials at 1000 °C was used more than fifty-eight times, the working surface was peeled off.

### Example 2

In step 1, 12wt% of mullite powder, 28wt% of cordierite powder, and 12wt% of kaolin powder were mixed in a high-speed mixer for 7 hours to obtain a base body material, and then 41wt% of mullite particles and 7wt% of cordierite particles were mixed for 3 hours to obtain a second mixture, and then 6wt% of binding agent based on the total of the base body material and the second mixture was added into the second mixture and mixed for 1.5 hours, and then the mixture was added into the base body material for mixing for 2 hours, and machine-pressed to form a base body. The binding agent was aluminum sol.

In step 2, 45wt% of aluminium oxide powder, 27wt% of zirconium oxide powder, 13wt% of titanium dioxide powder, and 15wt% of kaolin powder were used as raw materials, and then 4wt% of cerium oxide and 5wt% of water based on the raw materials were added, and the mixture was ball milled for 4 hours, dried, and crushed to obtain a working layer mixture.

In step 3, a layer of aluminium oxide powder with a thickness of 1.0 mm was evenly distributed on the working surface of the base body, and machine-pressed to obtain the sagger base body.

In step 4, a layer of working layer mixture with a thickness of 8.0 mm was evenly distributed on the working surface of the sagger base body, machine-pressed and dried; and then kept at the temperature of 1380 °C for 8 hours to obtain a long-life sagger for calcining the lithium battery positive material.

The long-life sagger for the calcining of lithium battery cathode materials prepared in this example was tested. The volume density was 2.62g/cm³; and the normal temperature compressive strength was 120MPa. The lithium battery cathode material, lithium cobaltate, was synthesized at 1200 °C. When the prepared sagger for calcining the lithium battery cathode materials was used more than fifty-nine times, the working surface was peeled off; when the sagger for producing the ternary cathode materials at 1000 °C was used more than fifty-eight times, the working surface was peeled off.

### Example 3

In step 1, 14wt% of mullite powder, 26wt% of cordierite powder, and 17wt% of kaolin powder were mixed in a high-speed mixer for 8 hours to obtain a base body material, and then 34wt% of mullite particles and 9wt% of cordierite particles were mixed for 4 hours to prepare the second mixture, and then 7wt% of binding agent based on a total of the base body material and the second mixture was added into the second mixture for mixing 1.5 hours, then the mixture was added to the base body material for mixing for 3 hours, and machine-pressed to obtain the base body. The binding agent was water glass.

In step 2, 48wt% of aluminium oxide powder, 22wt% of zirconium oxide powder, 12wt% of titanium dioxide powder, and 18wt% of kaolin powder were used as raw materials, and then 4.5wt% of cerium oxide and 6wt% of water based on the raw materials were added, and the mixture was ball milled for 4.5 hours, dried, and crushed to obtain the working layer mixture.

In step 3, a layer of aluminium oxide powder with a thickness of 1.2mm was evenly distributed on the working surface of the base body, and machine-pressed to obtain the sagger base body.

In step 4, a layer of working layer mixture with a thickness of 12mm was uniformly distributed on the working surface of the sagger base body, and machine-pressed and dried; and then kept at the temperature of 1400 °C for 9h to obtain a long-life sagger for calcining the lithium battery cathode materials.

The long-life sagger for calcining lithium battery cathode materials prepared in this example was tested. The volume density was 2.73g/cm³; and the normal temperature compressive strength was 130MPa. The lithium battery cathode material, lithium cobaltate, was synthesized at 1200 °C. When the prepared sagger for calcining lithium battery cathode materials was used more than fifty-nine times, the working surface was peeled off; when the sagger for producing the ternary cathode materials at 1000 °C was used more than fifty-nine times, the working surface was peeled off.

### Example 4

In step 1, 15wt% of mullite powder, 25wt% of cordierite powder, and 20wt% of kaolin powder were mixed in a high-speed mixer for 10 hours to prepare a base body material, and then 30wt% of mullite particles and 10wt% of cordierite particles were mixed for 5 hours to prepare the second mixture, and then 10wt% of binding agent based on a total of the base body material and the second mixture was added into the second mixture and mixed for 2 hours, then the mixture was added into the base body material for mixing for 3 hours, and machine-pressed to obtain the base body. The binding agent was silica sol.

In step 2, 50wt% of aluminium oxide powder, 20wt% of zirconium oxide powder, 10wt% of titanium dioxide powder, and 20wt% of kaolin powder were used as raw materials, and then 5wt% of cerium oxide and 8wt% of water based on the raw materials were added, and the mixture was ball milled for 5 hours, dried, and crushed to obtain a working layer mixture.

In step 3, a layer of aluminium oxide powder with a thickness of 1.5mm was evenly distributed on the working surface of the base body, and machine-pressed to obtain the sagger base body.

In step 4, a layer of working layer mixture with a thickness of 14mm was evenly distributed on the working surface of the sagger base body, and machine-pressed and dried; and then kept at the temperature of 1410 °C for 10 hours to prepare a long-life sagger for calcining the lithium battery cathode material.

The long-life sagger for calcining lithium battery cathode materials prepared in this example was tested. The volume density was 2.84g/cm³; and the normal temperature compressive strength was 140MPa. The lithium battery cathode material, lithium cobaltate, was synthesized at 1200 °C. When the prepared sagger for calcining lithium battery cathode materials was used more than sixty times, the working surface was peeled off; when the sagger for producing the ternary cathode materials at 1000 °C was used more than sixty times, the working surface was peeled off.

Compared with the conventional technology, this specific embodiment had the following positive effects.

In the present disclosure, by adding aluminium oxide powder between the sagger base body and the working layer, the reaction of titanium dioxide powder and cordierite to generate low-melting-point substances that affect the performance of the sagger was prevented. In the present disclosure, a working layer with excellent corrosion resistance was formed on the surface of the sagger, and titanium dioxide powder and aluminium oxide powder reacted *in situ* to generate aluminum titanate with low expansion and excellent corrosion resistance. The addition of cerium oxide promoted the generation of aluminum titanate. The addition of oxidation zirconium made the thermal expansion coefficients of the working layer and the base body close to each other, thereby preventing cracking between the base body and the working layer, and in the meantime further increasing the thermal shock stability of the working layer; and improving the binding strength between the working layer and the sagger base body, and in the meantime improving the service life of the sagger.

The long-life sagger for calcining lithium battery cathode materials prepared in the specific embodiments was tested and the performance indicators of all the examples were within following ranges: the volume density ranged from 2.53g/cm³ to 2.84g/cm³; the normal temperature pressure strength ranged from 100MPa to 140MPa; the lithium battery cathode material, lithium cobaltate, was synthesized at 1200 °C, and the prepared sagger for calcining the lithium battery cathode material can be used more than fifty-eight times; the sagger for producing the ternary cathode materials at 1000 °C can be used more than fifty-eight times.

Therefore, the present disclosure had the characteristics of environmental friendliness, simple process and low production cost; the prepared long-life sagger for calcining lithium battery cathode materials had the advantages of good thermal shock stability, excellent corrosion resistance and long service life.

### Comparative Example 1

In step 1, 10wt% of mullite powder, 30wt% of cordierite powder, and 10wt% kaolin powder were mixed in a high-speed mixer for 5 hours to prepare a base body material, and then 45wt% of mullite particles and 5wt% of cordierite particles were mixed for 2 hours to prepare a second mixture, and then 5wt% of binding agent based on the total of the base body material and the second mixture was added into the second mixture and mixed for 1 hour, and then the mixture was added to the base body material for mixing for 1 hour, and machine-pressed to obtain a base body. The binding agent was polyvinyl alcohol solution or alkaline pulp waste liquid.

In step 2, 40wt% of aluminium oxide powder, 30wt% of zirconium oxide powder, 20wt% of titanium dioxide powder, and 10wt% of kaolin powder were used as raw materials, and then 3wt% of cerium oxide and 3wt% of water based on the raw materials were added, and the mixture was ball milled for 3 hours, dried, and crushed to obtain the working layer mixture.

In step 3, a layer of working layer mixture with a thickness of 2 mm was uniformly distributed on the working surface of the base body, and machine-pressed, and dried; and then kept at the temperature of 1340 °C for 5 hours to prepare a sagger for calcining lithium battery cathode materials.

The sagger for calcining the lithium battery cathode materials prepared in this comparative example was tested. The volume density was 2.61g/cm³; the normal temperature compressive strength was 85MPa. The lithium battery cathode material, lithium cobaltate, was synthesized at 1200 °C. When the prepared saggar for calcining lithium battery cathode materials was used more than thirty-one times, the working surface was peeled off; when the sagger for producing the ternary cathode materials at 1000 °C was used more than thirty-nine times, the working surface was peeled off.

In Comparative Example 1, the intermediate layer aluminium oxide powder was not added, so that the performance of the sagger prepared by this method was not as good as that of Examples 1-4. This was because the reaction between titanium dioxide powder and cordierite producd a substance with a low melting point that affected the performance of the sagger.

### Comparative Example 2

In step 1, 10wt% of mullite powder, 30wt% of cordierite powder, and 10wt% of kaolin powder were mixed in a high-speed mixer for 5 hours to prepare a base body material, and then 45wt% mullite particles and 5wt% cordierite particles were mixed for 2 hours to prepare a second mixture, and then 5wt% of binding agent based on the total of the base body material and the second mixture was added into the second mixture and mixed for 1 hour, and then the mixture was added to the base body material for mixing for 1 hour, and machine-pressed to form a base body. The binding agent was polyvinyl alcohol solution or alkaline pulp waste liquid.

In step 2, 53wt% of aluminium oxide powder, 28wt% of zirconium oxide powder, and 19wt% of kaolin powder were used as raw materials, and then 3wt% of cerium oxide and 3wt% of water based on the raw materials were added, and the mixture was ball milled for 3 hours, dried, and crushed to obtain the working layer mixture.

In step 3, a layer of aluminium oxide powder with a thickness of 1.0mm was evenly distributed on the working surface of the base body, and machine pressed to obtain the sagger base body.

In step 4, a layer of working layer mixture with a thickness of 2 mm was uniformly distributed on the working surface of the sagger base body, and machine-pressed and dried; and then kept at the temperature of 1340 °C for 5 hours to obtain a long-life sagger for calcining the lithium battery cathode materials.

The long-life sagger for calcining of lithium battery cathode materials prepared in this comparative example was tested. The volume density was 2.44g/cm³; the normal temperature compressive strength was 76MPa. The lithium battery cathode material, lithium cobaltate, was synthesized at 1200 °C. When the prepared sagger for calcining lithium battery cathode materials was used more than twenty-five times, the working surface was peeled off; when the sagger for producing the ternary cathode materials at 1000 °C was used more than twenty-eight times, the working surface was peeled off.

In Comparative Example 2, the titanium dioxide powder was not added in the working layer mixture, so that the performance of the sagger prepared by this method was not as good as that of Examples 1-4. This was because aluminum titanate cannot be generates in the working layer.

### Comparative Example 3

In step 1, 10wt% of mullite powder, 30wt% of cordierite powder, and 10wt% of kaolin powder were mixed in a high-speed mixer for 5 hours to prepare a base body material, and then 45wt% of mullite particles and 5wt% of cordierite particles were mixed for 2 hours to prepare a second mixture, and then 5wt% of binding agent based on a total of the base body material and the second mixture was added into the second mixture and mixed for 1 hour, then the mixture was added into the base body material for mixing for 1 hour, and machine-pressed to form a base body. The binding agent was polyvinyl alcohol solution or alkaline pulp waste liquid.

In step 2, 51% of aluminium oxide powder, 30wt% of aluminum titanate powder, and 19wt% of kaolin powder were used as raw materials, and ball milled for 3 hours, dried, and crushed to obtain the working layer mixture.

In step 3, a layer of aluminium oxide powder with a thickness of 0.5mm was evenly distributed on the working surface of the base body, and machine-pressed to obtain the sagger base body.

In step 4, a layer of working layer mixture with a thickness of 2mm was evenly distributed on the working surface of the sagger base body, machine-pressed and dried; and then kept at the temperature of 1340 °C for 5 hours to obtain a sagger for calcining the lithium battery cathode material.

The sagger for calcining of lithium battery cathode materials prepared in this comparative example was tested. The volume density was 2.46g/cm³; the normal temperature compressive strength was 75MPa. The lithium battery cathode material, lithium cobaltate, was synthesized at 1200 °C. When the prepared sagger for calcining lithium battery cathode materials was used more than forty-six times, the working surface was peeled off; when the sagger for producing the ternary cathode materials at 1000 °C was used more than forty-five times, the working surface was peeled off.

In Comparative Example 3, the aluminum titanate was directly added into the working layer mixture, so that the performance of the sagger prepared by this method was not as good as that of Examples 1 to 4.

### Comparative Example 4

In step 1, 10wt% of mullite powder, 30wt% of cordierite powder, 10wt% of kaolin powder, 45wt% of mullite particles, and 5wt% of cordierite particles were mixed to obtain a mixture 1, and then 5wt% of binding agent based on the mixture 1 was added into the mixture 1 and mixed for 9 hours to obtain a mixture 2. The binding agent was polyvinyl alcohol solution or alkaline pulp waste liquid.

In step 2, 53wt% of aluminum titanate powder, 35wt% of zirconium oxide powder, and 12wt% of kaolin powder were used as raw materials, and ball milled for 3 hours, dried, and crushed to obtain a mixture 3.

In step 3, the mixture 2 and the mixture 3 were mixed, machine-pressed, dried, and then kept at the temperature of 1340 °C for 5 hours to prepare a sagger for calcining lithium battery cathode materials.

The sagger for calcining lithium battery cathode materials prepared in this comparative example was tested. The volume density was 2.64g/cm³; the normal temperature compressive strength was 84MPa. The lithium battery cathode material, lithium cobaltate, was synthesized at 1200 °C. When the prepared saggar for calcining lithium battery cathode materials was used more than thirty-eight times, the working surface was peeled off; when the sagger for producing the ternary cathode materials at 1000 °C was used more than forty-one times, the working surface was peeled off.

In Comparative Example 4, the aluminum titanate was directly used as the base body raw material, so that the performance of the prepared sagger was not as good as that of Examples 1 to 4.

The description of the above examples was only used to help understand the method and core idea of the present disclosure. It should be noted that those skilled in the art can make several improvements and modifications to the present disclosure without departing from the principles of the present disclosure, and these improvements and modifications also fall within the scope of the claims of the present disclosure.

The above description of the disclosed examples enables those skilled in the art to realize or use the present disclosure. Various modifications to these examples will be readily apparent to those skilled in the art, and the generic principles defined herein may be practiced in other examples without departing from the spirit or scope of the present disclosure. Thus, the present disclosure is not intended to be limited to the examples shown herein but is to be accorded the widest scope consistent with the principles and novel features disclosed herein.

## Claims

1. A sagger, comprising: a base body, an intermediate layer and a working layer stacked in sequence;
wherein the base body comprises mullite and cordierite, the intermediate layer comprises aluminum oxide, and the working layer comprises aluminum titanate.

2. The sagger according to claim 1, wherein the working layer further comprises zirconium oxide.

3. A method for preparing the sagger according to any one of claims 1 to 2, comprising the following steps:
mixing mullite and cordierite, and molding, to obtain a base body;
distributing aluminium oxide powder on a surface of the base body and pressing, to obtain a sagger base body; and
distributing a working layer mixture on a surface of the sagger base body, pressing and heat treating to obtain a sagger; wherein the working layer mixture comprises a first mixture that can react to obtain aluminum titanate.

4. The method according to claim 3, wherein the working layer mixture comprises aluminium oxide powder, titanium dioxide powder and kaolin powder.

5. The method according to claim 3 or 4, wherein the base body is prepared by a method comprising:
mixing mullite powder, cordierite powder and kaolin powder to obtain a base body material, mixing mullite particles and cordierite particles to obtain a second mixture, adding a binding agent into the second mixture and then mixing with the base body material, and molding to obtain the base body.

6. The method according to claim 5, wherein based on a sum of the base body material and the second mixture, a content of the mullite powder ranges from 10wt% to 15wt%, a content of the cordierite powder ranges from 25 wt% to 30wt%, and a content of the kaolin powder ranges from 10wt% to 20wt%, a content of the mullite particles ranges from 30wt% to 45wt%, a content of the cordierite particles ranges from 5wt% to 10wt%, and a content of the binding agent ranges from 5wt% to 10wt%.

7. The method according to claim 5, wherein the method meets at least one of following conditions: in the base body material, a content of Al₂O₃ in the mullite powder is ≥ 65wt% and a particle size of the mullite powder is less than 89 µm; a content of Al₂O₃ in the cordierite powder is ≥ 34wt%, a content of SiO₂ in the cordierite powder is ≥ 42wt%, and a content of MgO in the cordierite powder is ≥ 14wt%, and an average particle size of the cordierite powder is less than 75 µm; a content of Al₂O₃ in the kaolin powder is ≥ 35wt%; and a particle size of the kaolin powder is less than 60 µm.

8. The method according to claim 5, wherein in the second mixture, a content of Al₂O₃ in the mullite particles is ≥ 65wt%; a particle gradation of the mullite particles is that a particle size with less than 3mm and greater than or equal to 1mm ranges from 40wt% to 50wt%, a particle size with less than 1mm and greater than or equal to 0.5mm ranges from 30wt% to 45wt%, and a particle size with less than 0.50mm ranges from 20wt% to 25wt%; a content of Al₂O₃ in the cordierite particles is ≥ 34wt%, a content of SiO₂ in the cordierite particles is ≥ 42wt%, and a content of MgO in the cordierite particles is ≥ 14wt%; a particle gradation of the cordierite particles is that a particle size with less than 1 mm and greater than or equal to 0.5 mm ranges from 60wt% to 75wt%, and a particle size with less than 0.50 mm ranges from 25wt% to 40wt%.

9. The method according to claim 3 or 4, wherein a content of Al₂O₃ in the aluminium oxide powder in the intermediate layer is ≥ 99wt%, and a particle size of the aluminium oxide powder is less than 20 µm.

10. The method according to claim 3 or 4, wherein based on the mass of the first mixture, the first mixture comprises 40-50wt% of aluminium oxide powder, 20-35wt% of zirconium oxide powder, 10-20wt% of titanium dioxide powder and 10-20wt% of kaolin powder; the working layer mixture further comprises additional materials, and the additional materials are 3-5wt% of cerium oxide powder and 3-8wt% of water based on the first mixture.

11. The method according to claim 10, wherein the working layer mixture meets at least one of following conditions: a content of Al₂O₃ in the aluminium oxide powder is ≥ 99wt%, and a particle size of the aluminium oxide powder is less than 20 µm; a content of ZrO₂ in the zirconium oxide powder is ≥ 95wt%, and a particle size of the zirconium oxide powder is less than 30 µm; a content of TiO₂ in the titanium dioxide powder is ≥ 95wt%, and a particle size of the titanium dioxide powder is less than 30 µm; in the additional materials, a content of CeO₂ in the cerium oxide powder is ≥ 95wt%, and a particle size of the cerium oxide powder is less than 40 µm.

12. The method according to claim 4, wherein the heat treatment is performed at a temperature of 1340 °C to 1410 °C for a duration of 5 h to 10 h.
